# EUROPEAN PATENT APPLICATION

(11) **EP 4 057 124 A1**
(43) Date of publication of application: **14.09.2022**
(21) Application number: 21194480.6
(22) Date of filing: 02.09.2021
(51) Int. Cl.: G06F 3/14, G09G 5/373, G06F 3/04845, H04N 21/431

(54) **METHOD AND APPARATUS FOR INTERACTION BETWEEN DEVICES AND MEDIUM**

(30) Priority: 12.03.2021 CN 202110271442
(71) Applicant: Beijing Xiaomi Mobile Software Co., Ltd., Beijing 100085 (CN)
(72) Inventor: LIU, Lijun, Beijing, 100085 (CN); JIA, Yongqiang, Beijing, 100085 (CN)
(74) Representative: dompatent von Kreisler Selting Werner - Partnerschaft von Patent- und Rechtsanwälten mbB

(57) **Abstract**

The present disclosure relates to a method, an apparatus for interaction between devices and a storage medium. The method includes: receiving (101) a first target size from a second device in a case that a virtual display of the first device is displayed in a screen-projection window on a display screen of a second device, in which, a first content is displayed on the virtual display of the first device, and a size of the screen-projection window is a second target size; resizing (102) the virtual display based on the first target size; and displaying (103) the resized virtual display in the screen-projection window. The method can adjust the size of the screen-projection window on the second device, which is convenient for a user to customize the size of the screen-projection window according to needs, improving the user experience.

## Description

### TECHNICAL FIELD

The present disclosure generally relates to a field of interaction technologies between devices, and more particularly, to a method and an apparatus for interaction between devices and a medium.

### BACKGROUND

With the increased use of devices connected to the internet, interactions between these devices also increase drastically. In the following, the screen-projection interaction between a mobile phone and a computer is taken as an example to introduce an interaction process. (1) A virtual display is created on the mobile phone side, a size of the virtual display is consistent with a size of a display screen of the mobile phone, and the display content of the virtual display is consistent with that of the display screen of mobile phone. (2) The video stream encoded based on the display content of the virtual display is transmitted to the computer side through connection such as Wi-Fi connection between the mobile phone and the computer, and the computer side displays the display content of the virtual display through video encoding and decoding. (3) The operation information entered through the mouse and keyboard at the computer side is sent to the mobile phone through the Wi-Fi connection, and the mobile phone executes the corresponding command.

However, in the current application, the size of the screen-projection window of the mobile phone on the computer is fixed, which cannot be customized according to the needs of the user, resulting in great restrictions on the operation of the screen-projection window on the computer, resulting in poor user experience.

### SUMMARY

To overcome the problems in the related art, the present disclosure provides methods and apparatuses for interaction between devices and a medium.

According to a first aspect of the present disclosure, there is provided a method for interaction between devices, applied to a first device, including: receiving a first target size from a second device in a case that a virtual display of the first device is displayed in a screen-projection window on a display screen of a second device, in which, a first content is displayed on the virtual display of the first device, and a size of the screen-projection window is a second target size; resizing the virtual display based on the first target size; and displaying the resized virtual display in the screen-projection window.

The method optionally further includes: updating the first content displayed on the virtual display based on the size of the resized virtual display, to adapt the updated first content to the resized virtual display. Displaying the resized virtual display in the screen-projection window includes: sending the updated first content to the second device, so as to display the updated first content in the screen-projection window.

Resizing the virtual display based on the first target size optionally includes: resizing the virtual display based on the first target size and a size of a display screen of the first device, to make boundary of the virtual display within boundary of the display screen of the first device.

The first target size optionally includes a target length and a target width, or includes a target aspect ratio.

According to a second aspect of the present disclosure, there is provided a method for interaction between devices, applied to a second device, including: obtaining a first target size of a virtual display of a first device in a case that the virtual display is displayed in a screen-projection window on a display screen of the second device, in which, the first target size is a size to which the virtual display is to be resized; sending the first target size to the first device; adjusting the screen-projection window to a second target size; receiving a resized virtual display from the first device; and displaying the resized virtual display in the adjusted screen-projection window.

Receiving the resized virtual display from the first device optionally includes: receiving an updated first content on the resized virtual display from the first device. Displaying the resized virtual display in the adjusted screen-projection window includes: displaying the updated first content in the adjusted screen-projection window.

According to a third aspect of the present disclosure, there is provided an apparatus for interaction between devices, applied to a first device, including: a first receiving module, configured to receive a first target size from a second device in a case that a virtual display of the first device is displayed in a screen-projection window on a display screen of a second device, in which, a first content is displayed on the virtual display of the first device, and a size of the screen-projection window is a second target size; a first adjusting module, configured to resize the virtual display based on the first target size; and a first display module, configured to display the resized virtual display in the screen-projection window.

The apparatus optionally further includes an updating module, configured to update the first content displayed on the virtual display based on the size of the resized virtual display, to adapt the updated first content to the resized virtual display.

The first displaying module is configured to send the updated first content to the second device, so as to display the updated first content in the screen-projection window.

The first adjusting module is optionally configured to resize the virtual display based on the first target size by: resizing the virtual display based on the first target size and a size of a display screen of the first device, to make boundary of the virtual display within boundary of the display screen of the first device.

The first target size optionally includes a target length and a target width, or includes a target aspect ratio.

According to a fourth aspect of the present disclosure, there is provided an apparatus for interaction between devices, applied to a second device, including: an obtaining module, configured to obtain a first target size of a virtual display of a first device in a case that the virtual display is displayed in a screen-projection window on a display screen of the second device, in which, the first target size is a size to which the virtual display is to be resized; a sending module, configured to send the first target size to the first device; a second adjusting module, configured to adjust the screen-projection window to a second target size; a second receiving module, configured to receive a resized virtual display from the first device; and a second displaying module, configured to display the resized virtual display in the adjusted screen-projection window.

The second receiving module is optionally configured to receive an updated first content on the resized virtual display from the first device.

The second displaying module is configured to display the updated first content in the adjusted screen-projection window.

According to a fifth aspect of the present disclosure, there is provided a device, including: a processor; and a memory for storing instructions executable by the processor. The processor is configured to perform the above method for interaction between devices according to the first aspect of the present disclosure when executing the instructions.

According to a sixth aspect of the present disclosure, there is provided a device, including: a processor; and a memory for storing instructions executable by the processor. The processor is configured to perform the above method for interaction between devices according to the second aspect of the present disclosure when executing the instructions.

According to a seventh aspect of the present disclosure, there is provided a non-transitory computer-readable storage medium having stored therein instructions that, when executed by a processor of a device, causes the device to perform the above method according to the first or second aspect of the present disclosure for interaction between devices.

According to an eighth aspect of the present disclosure, there is provided a non-transitory computer-readable storage medium having stored therein instructions that, when executed by a processor of a device, causes the device to perform the above method for interaction between devices.

With the method of the present disclosure, in a case that the virtual display of the first device is displayed in the screen-projection window on the display screen of the second device, when a user needs to adjust the size of the screen-projection window on the second device, the second device may send target size information to which the corresponding virtual display is to be adjusted to the first device, the first device adjusts the size of the virtual display based on the target size information after receiving the target size information, and the adjusted virtual display is displayed on the screen-projection window having the second target size. Thus, the adjustment of the size of the screen-projection window on the second device is realized, which is convenient for the user to customize the size of the screen-projection window according to needs.

With this method, the user has a relatively great flexibility in operating the screen-projection window of the mobile phone using an external device such as a computer, and the operation is relatively close to an operation on a window of a device such as a local computer, thereby improving the user experience.

It is to be understood that both the foregoing general description and the following detailed description are exemplary and explanatory only and are not restrictive of the present disclosure, as claimed.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a flow chart showing a method for interaction between devices according to an embodiment of the present disclosure.
FIG. 2 is a flow chart showing a method for interaction between devices according to an embodiment of the present disclosure.
FIG. 3 is a flow chart showing a method for interaction between devices according to an embodiment of the present disclosure.
FIG. 4 is a schematic diagram showing virtual display before size adjustment according to an embodiment of the present disclosure.
FIG. 5 is a schematic diagram showing virtual display after size adjustment according to an embodiment of the present disclosure.
FIG. 6 is a block diagram illustrating an apparatus for interaction between devices according to an embodiment of the present disclosure.
FIG. 7 is a block diagram illustrating an apparatus for interaction between devices according to an embodiment of the present disclosure.
FIG. 8 is a schematic diagram of a device according to an embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

At present, the size of a screen-projection window on a computer is fixed and cannot be customized according to the needs of the user. This makes the operation of the screen-projection window on the computer very limited, resulting in a poor user experience.

The present disclosure provides a method for interaction between devices. In this method, in a case that a virtual display of a first device is displayed in a screen-projection window on a display screen of a second device, the second device may send target size information to the first device when a user needs to adjust a size of the screen-projection window on the second device. The target size information indicates size information to which the corresponding virtual display is to be adjusted. After receiving the target size information, the first device resize the virtual display according to the target size information. The resized virtual display is displayed in the screen-projection window having a second target size on the display screen of the second device. Thus, the size adjustment of the screen-projection window on the second device is realized, which is convenient for the user to customize the size of the screen-projection window according to needs, improving the user experience.

The first device in the present disclosure is a sending device of screen-projection data. The first device may generate display content of the virtual display. For example, the first device may be a mobile phone, a PAD, a wearable device, and the like. The second device may be a receiving device of screen-projection data. The second device is used to display the screen-projection window on its display screen. For example, the second device may be a computer or the like.

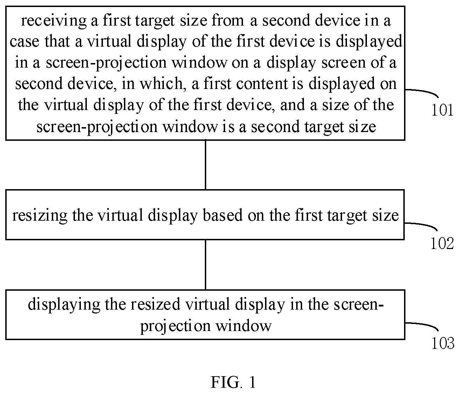

The present disclosure provides a method for interaction between devices, applied to a first device. As illustrated in FIG. 1, the method includes the following.

At block 101, a first target size is received from a second device in a case that a virtual display of the first device is displayed in a screen-projection window on a display screen of a second device. A first content is displayed on the virtual display of the first device, and a size of the screen-projection window is a second target size. The first target size is a size to which the virtual display is to be resized, and the first target size is determined when the screen-projection window is adjusted to the second target size

At block 102, the virtual display is resized based on the first target size.

At block 103, the resized virtual display is displayed in the screen-projection window.

For illustration purposes, for example, in some embodiments, the first device is a mobile phone and the second device is a computer. A virtual display may be generated on the mobile phone. The size of the virtual display may be the same as or different from the size of a physical screen of the mobile phone. Through the connection between the mobile phone and the computer, the display content on the virtual display of the mobile phone is projected to the display screen of the computer for display. At this time, a window that displays the virtual display of the mobile phone on the display screen of the computer is called the screen-projection window.

In the step at block 101, in a case that the virtual display of the first device (such as the mobile phone) is displayed in the screen-projection window on the display screen of the second device (such as the computer), the user may resize the screen-projection window on the display screen of the second device. The second device may in response to the operation of the user, obtain a first target size to which the virtual display is to be adjusted, and then sends the first target size to the first device. For example, based on a pixel value corresponding to a window size of the virtual display and a pixel value corresponding to the size of the screen-projection window, a relative value corresponding to the two pixel values can be obtained, and the first target size to which the virtual display is to be adjusted may be obtained according to the relative value and the size of the screen-projection window adjusted by the user.

In the step at block 102, the first target size received by the first device may be a specific size to which the virtual display is to be adjusted, such as the length and width of the virtual display. Alternatively, the first target size may be an aspect ratio of a window size to which the virtual display is to be adjusted. When the first target size is the specific size to which the virtual display is to be adjusted, the virtual display may be resized according to the specific size. When the first target size is the aspect ratio to which the virtual display is to be adjusted, a specific size may be determined according to the aspect ratio and the specific size is used to resize the virtual display. The specific adjustment method may refer to the description of the detailed implementation method below.

In the step at block 103, the resized virtual display is displayed in the screen-projection window on the display screen of the second device. The screen-projection window is a resized window with a second target size.

With the above method, a user may adjust or update the size of the virtual display on the first device side based on the size of the screen-projection window by adjusting the size of the screen-projection window on the second device side. In this way, it is convenient for the user to customize the size of the screen-projection window according to needs, and the user has a relatively great flexibility in operating the screen-projection window of the mobile phone using an external device such as a computer, and the operation is relatively close to an operation on a window of a device such as a local computer, thereby improving the user experience.

In an embodiment, the user may first operate the screen-projection window on the second device side to enlarge or reduce the screen-projection window to the second target size desired by the user. At this time, the enlarged or reduced screen-projection window is only virtual, rather than the actual projection of the virtual display on the first device. Then, the second device obtains the first target size of the virtual display on the first device based on the second target size of the screen-projection window and a correspondence relationships among pixel values corresponding to the sizes of the virtual display window on the first device and the pixel values corresponding to the sizes of the screen-projection window on the second device. The second device sends the first target size to the first device. The first device resizes the virtual display based on the first target size, and projects the resized virtual display to the screen-projection window of the second device with the second target size.

In another embodiment, the user can set the second target size of the screen-projection window on the second device through a setting option provided by the second device. The second device obtains the first target size of the virtual display on the first device based on the set second target size of the screen-projection window and the correspondence relationships among the pixel values corresponding to the sizes of the virtual display window on the first device and the pixel values corresponding to the sizes of the screen-projection window on the second device. The second device sends the first target size to the first device. The first device resizes the virtual display based on the first target size, and projects the resized the virtual display to the screen-projection window of the second device with the second target size.

In an alternative embodiment, the method further includes the following.

The first content displayed on the virtual display is updated based on the first target size, to adapt the updated first content to the resized virtual display.

The step of displaying the resized virtual display in the screen-projection window with the second target size includes: sending the updated first content to the second device, so as to display the updated first content in the screen-projection window with the second target size.

In this implementation, the updated first content of the virtual display is adapted to the resized virtual display, and further adapted to the adjusted screen-projection window on the second device. Through the above method, the updated first content is the display content displayed on the adjusted virtual display, and the aspect ratio of the resized virtual display is consistent with the aspect ratio to which the screen-projection window is to be adjusted, so that the updated first content is adapted to the resized screen-projection window when the updated first content is adapted to the resized virtual display.

In an alternative embodiment, resizing the virtual display based on the first target size includes the following.

The virtual display is resized based on the first target size and a size of a display screen of the first device, to make boundary of the virtual display within boundary of the display screen of the first device.

It should be noted that, when the virtual display is displayed on the display screen of the first device, in order to achieve a better display effect, the boundary of the virtual display is made within the boundary of the display screen of the first device where the virtual display is located. Therefore, when resizing the virtual display, the size of the virtual display is adjusted not only based on the target size information, but also based on the size of the display screen of the first device.

It can be known that, when the target size information is a target aspect ratio, the specific size of the virtual display is not limited when resizing of the virtual display based on the target aspect ratio and the size of the display screen of the first device, as long as the aspect ratio of the virtual display size meets the target aspect ratio and the boundary of the virtual display is within the boundary of the display screen of the first device, and the specific size of the. In addition, during resizing, only the length of the virtual display may be adjusted, or only the width of the virtual display may be adjusted, or both the length and width of the virtual display may be adjusted.

For example, the length of the virtual display is 6 units, the width is 3 units, and the target aspect ratio is 3:1. Then, the width of the virtual display may be reduced by 1 unit. The size of the adjusted virtual display meets the target aspect ratio 3: 1. In this adjustment method, only the width of the virtual display is adjusted.

For another example, the length of the virtual display is 6 units, the width is 2 units, and the target aspect ratio is 3:2. Then, the length of the virtual display may be reduced by 3 units. The size of the adjusted virtual display meets the target aspect ratio 3: 2. In this adjustment method, only the length of the virtual display is adjusted.

For another example, the length of the virtual display is 3 units, the width is 2 units, and the target aspect ratio is 2:1. Then, the length of the virtual display may be increased by 3 units, and the width of the virtual display may be increased by 1 unit. The size of the adjusted virtual display meets the target aspect ratio 2:1. In this adjustment method, both the length and the width of the virtual display are adjusted.

In an alternative embodiment, determining the updated first content of the virtual display based on the size of the resized virtual display including the following.

Content of an application to be displayed on the virtual display is loaded, and the application content is displayed on the resized virtual display in a way adapted to the virtual display.

The updated first content of the resized virtual display is determined.

The application includes system applications and non-system applications of the first device. System applications are, for example, desktop applications, phone applications, SMS applications, and settings applications preset by the system, and non-system applications are, for example, instant chat applications, news applications, and video playback applications downloaded by users themselves.

When resizing the virtual display, the content of an application to be displayed on the virtual display is reloaded, and this reloading can make the content of the application adapt to the resized virtual display for display. This is due to the following reasons. If the content of the application is not reloaded, the proportion of the display content occupying the virtual display becomes small when the size of the virtual display increases, leaving a large part of the virtual display blank, or the proportion of the display content occupying the virtual display increases and the display content may be displayed incompletely when the size of the virtual display decreases. Both of these two situations affect the normal display of the content of the application. After the content of the application is reloaded, the content of the application can be adapted to the adjusted virtual display for display. Generally, this display mode adapted to the virtual display may be a display mode that covers the virtual display.

After determining the content of the application to be displayed and the size of the resized virtual display, the content of the application to be displayed on the virtual display may be loaded through a way in the prior art, and may be displayed in a manner adapted to the virtual display. Therefore, it is not repeated here.

After the display content of the virtual display is sent to the second device, the screen-projection window of the second device displays the display content of the virtual display in the form of covering the screen-projection window, thereby better ensuring that the screen-projection window can still display the display content of the virtual display normally in the form of filling the screen-projection window after the size of the screen-projection window is adjusted, which improves the user experience.

In an alternative embodiment, the first target size includes a target length and a target width to which the virtual display to be adjusted, or includes a target aspect ratio to which the virtual display to be adjusted.

As described above, the first target size received by the first device may be a size to which the virtual display to be adjusted, or it may be an aspect ratio of a window size to which the virtual display to be adjusted.

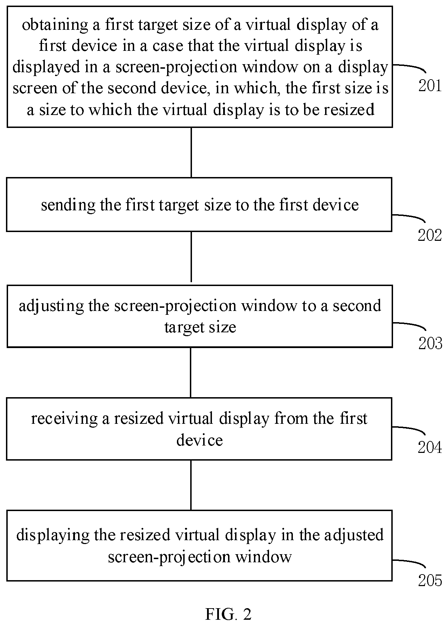

The present disclosure further provides a method for interaction between devices, applied to a second device. As illustrated in FIG. 2, the method includes the following.

At block 201, a first target size of a virtual display of a first device is obtained in a case that the virtual display is displayed in a screen-projection window on a display screen of the second device, the first target size is a size to which the virtual display is to be resized.

At block 202, the first target size is sent to the first device.

At block 203, the screen-projection window is adjusted to a second target size.

At block 204, a resized virtual display is received from the first device.

At block 205, the resized virtual display is displayed in the adjusted screen-projection window.

In the step at the block 201, in a case that the virtual display of the first device (such as the mobile phone) is displayed in the screen-projection window on the display screen of the second device (such as the computer), the user may resize the screen-projection window on the display screen of the second device. For example, one side (for example, the left side) of the screen-projection window is dragged to a certain position (for example, a middle position of the display screen of the second device), so as to obtain the first target size based on a size of the dragged screen-projection window. The second device obtains the first target size. It should be noted that, the first target size may be a size to which the virtual display is to be adjusted, or may be an aspect ratio of a window size to which the virtual display is to be adjusted.

In the steps at the blocks 202 and 203, the above described first target size is sent to the first device, and the screen-projection window is adjusted to the second target size. The second target size of the screen-projection window corresponds to the first target size of the virtual display. The operations at blocks 202 and 203 may be performed simultaneously or sequentially. When proceeding sequentially, the operation at block 202 may be performed first, or the operation at block 203 may be performed first.

In the step at the block 204, the resized virtual display is received from the first device. The resized virtual display adapted to the resized screen-projection window.

In the step at the block 205, the resized virtual display is displayed in the resized screen-projection window having the second target size.

With the above method, a user may update the virtual display on the first device side based on the size of the screen-projection window by adjusting the size of the screen-projection window on the second device side. In this way, it is convenient for the user to customize the size of the screen-projection window according to needs, and the user has a relatively great flexibility in operating the screen-projection window of the mobile phone using an external device such as a computer, and the operation is relatively close to an operation on a window of a device such as a local computer, thereby improving the user experience.

In an alternative embodiment, receiving the resized virtual display from the first device includes the following.

An updated first content on the resized virtual display is received from the first device.

Displaying the resized virtual display in the adjusted screen-projection window includes the following.

The updated first content is displayed in the adjusted screen-projection window.

The updated first content is first content adapted to the adjusted screen-projection window. This is because that the virtual display of the first device is adjusted based on the adjustment of the screen-projection window, and the updated first content is adapted to the adjusted virtual display.

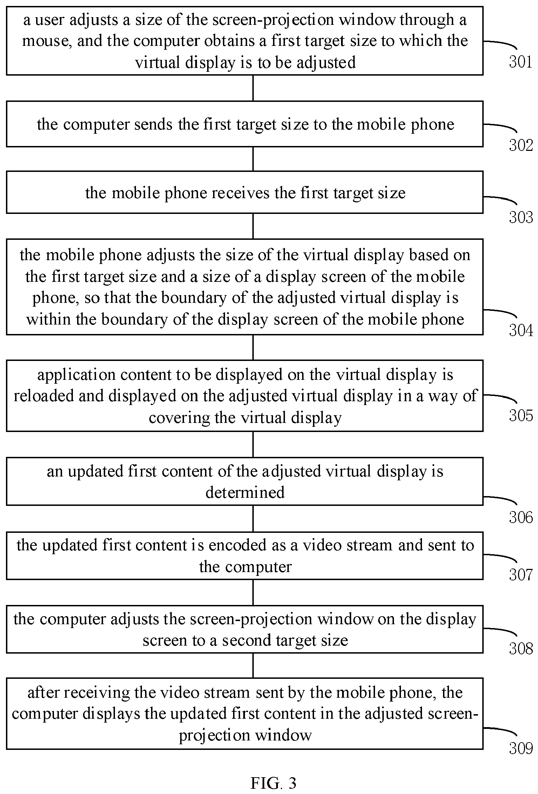

The present disclosure further provided a detailed embodiment, in which the first device is a mobile phone, and the second device is a computer. For example, an application scenario of this embodiment is as following. A bidirectional connection is established between the mobile phone and the computer. A new virtual display is created on the mobile phone side. A size of the virtual display is the same as a size of a physical screen (display screen) of the mobile phone, and the display content of the virtual display is consistent with the display content of the physical screen of the mobile phone. The mobile phone encodes the display content of the virtual display and sends it to the computer through the connection between the mobile phone and the computer in the form of a video stream. The computer decodes the video stream after receiving the video stream sent by the mobile phone, and displays it in the form of a separate window (screen-projection window) on the display screen of the computer. As illustrated in FIG. 3, this embodiment may include the following.

At block 301, a user adjusts a size of the screen-projection window through a mouse, and the computer obtains a first target size to which the virtual display is to be adjusted.

At block 302, the computer sends the first target size to the mobile phone.

At block 303, the mobile phone receives the first target size.

At block 304, the mobile phone adjusts the size of the virtual display based on the first target size and a size of a display screen of the mobile phone, so that the boundary of the adjusted virtual display is within the boundary of the display screen of the mobile phone.

At block 305, application content to be displayed on the virtual display is reloaded and displayed on the adjusted virtual display in a way of covering the virtual display.

At block 306, an updated first content of the adjusted virtual display is determined.

At block 307, the updated first content is encoded as a video stream and sent to the computer.

At block 308, the computer adjusts the screen-projection window on the display screen to a second target size.

At block 309, after receiving the video stream sent by the mobile phone, the computer displays the updated first content in the adjusted screen-projection window.

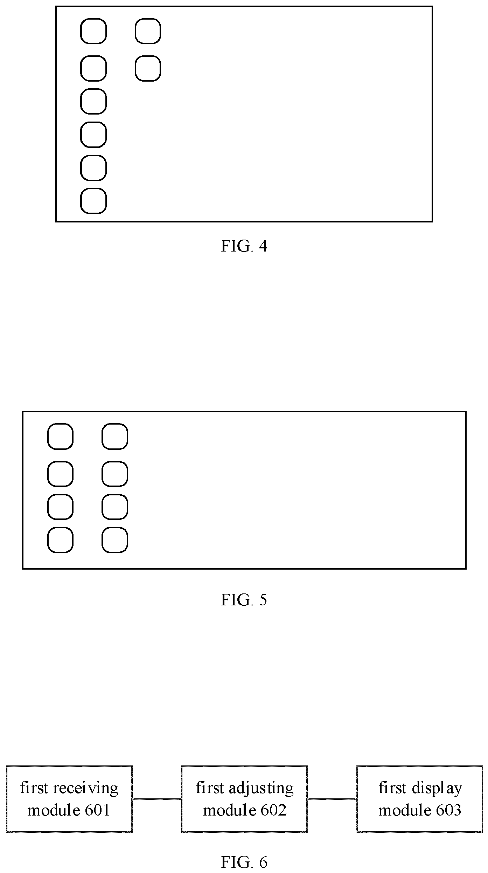

FIG. 4 and FIG. 5 respectively show the display content of the virtual display before and after the adjustment of the size of the screen-projection window in the embodiment shown in FIG. 3. The virtual displays in FIG. 4 and FIG. 5 are virtual displays when the mobile phone is displayed horizontally. It can be seen from the FIGs that the size of the virtual display in FIG. 4 and FIG. 5 changes, i.e., the aspect ratio is changed, and the display content of the virtual display is changed. As illustrated in the figures, the layout of icons on the virtual display is changed to adapt to the adjustment of size of the screen-projection window.

With the method of the present disclosure, in a case that the virtual display of the first device is displayed in the screen-projection window on the display screen of the second device, when a user needs to adjust the size of the screen-projection window on the second device, the second device may send target size information to which the corresponding virtual display is to be adjusted to the first device, the first device adjusts the size of the virtual display based on the target size information after receiving the target size information, and the adjusted virtual display is displayed on the screen-projection window having the second target size. Thus, the adjustment of the size of the screen-projection window on the second device is realized, which is convenient for the user to customize the size of the screen-projection window according to needs.

With this method, the user has a relatively great flexibility in operating the screen-projection window of the mobile phone using an external device such as a computer, and the operation is relatively close to an operation on a window of a device such as a local computer, thereby improving the user experience.

The present disclosure further provides an apparatus for interaction between devices, applied to a first device. As illustrated in FIG. 6, the apparatus includes a first receiving module 601, a first adjusting module 602, and a first display module 603.

The first receiving module 601 is configured to receive a first target size from a second device in a case that a virtual display of the first device is displayed in a screen-projection window on a display screen of a second device, wherein, a first content is displayed on the virtual display of the first device, and a size of the screen-projection window is a second target size.

The first adjusting module 602 is configured to resize the virtual display based on the first target size.

The first display module 603 is configured to display the resized virtual display in the screen-projection window.

In an alternative embodiment, the apparatus further includes an updating module, configured to update the first content displayed on the virtual display based on the size of the resized virtual display, to adapt the updated first content to the resized virtual display.

The first displaying module is configured to send the updated first content to the second device, so as to display the updated first content in the screen-projection window.

In an alternative embodiment, the first adjusting module is configured to resize the virtual display based on the first target size by: resizing the virtual display based on the first target size and a size of a display screen of the first device, to make boundary of the virtual display within boundary of the display screen of the first device.

In an alternative embodiment, the first target size includes a target length and a target width, or includes a target aspect ratio.

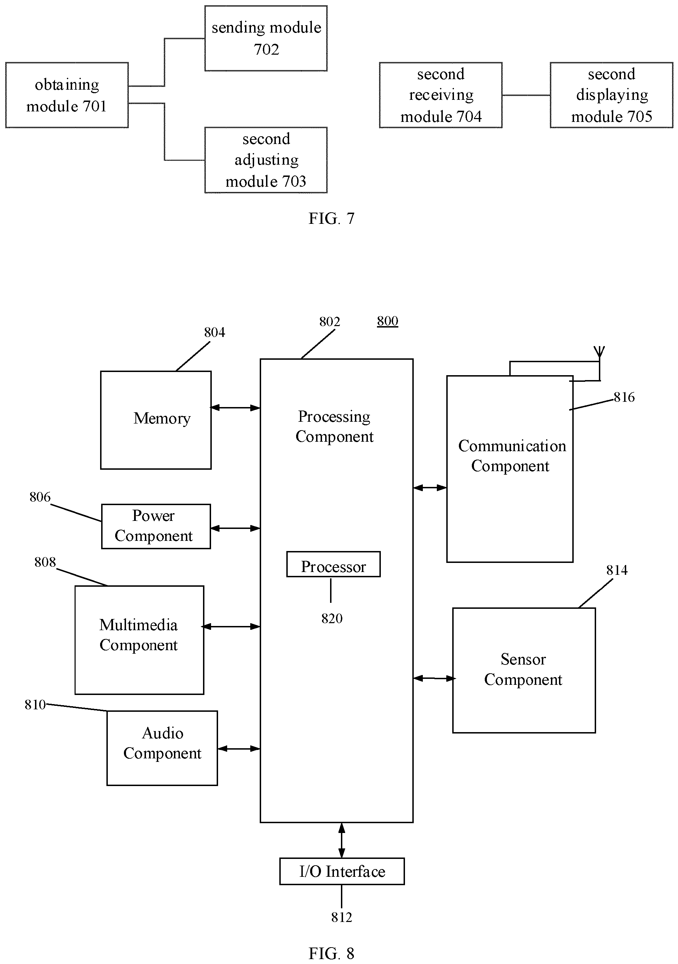

The present disclosure further provides an apparatus for interaction between devices, applied to a second device. As illustrated in FIG. 7, the apparatus includes an obtaining module 701, a sending module 702, a second adjusting module 703, a second receiving module 704, and a second displaying module 705.

The obtaining module 701 is configured to obtain a first target size of a virtual display of a first device in a case that the virtual display is displayed in a screen-projection window on a display screen of the second device, in which, the first target size is a size to which the virtual display is to be resized.

The sending module 702 is configured to send the first target size to the first device.

The second adjusting module 703 is configured to adjust the screen-projection window to a second target size.

The second receiving module 704 is configured to receive a resized virtual display from the first device.

The second displaying module 705 is configured to display the resized virtual display in the adjusted screen-projection window.

In an alternative embodiment, the second receiving module is configured to receive an updated first content on the resized virtual display from the first device.

The second displaying module is configured to display the updated first content in the adjusted screen-projection window.

With respect to the apparatuses in the above embodiments, the specific manners for performing operations for individual modules therein have been described in detail in the embodiments regarding the methods, which will not be elaborated herein.

With the above apparatus, a user may update the size of the virtual display on the first device side based on the size of the screen-projection window by adjusting the size of the screen-projection window on the second device side. In this way, it is convenient for the user to customize the size of the screen-projection window according to needs, and the user has a relatively great flexibility in operating the screen-projection window of the mobile phone using an external device such as a computer, and the operation is relatively close to an operation on a window of a device such as a local computer, thereby improving the user experience.

In an exemplary embodiment, as illustrated in FIG. 8, a device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G, or 3G, 4G/LTE, 5G/NR or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 820 in the device 800, for performing the above-described methods. For example, the non-transitory computer-readable storage medium may be a ROM, a RAM, a CD-ROM, a magnetic tape, a floppy disc, an optical data storage device, and the like.

When the instructions in the storage medium is executed by the processor of the device, the device is caused to perform a method including: receiving a first target size from a second device in a case that a virtual display of the first device is displayed in a screen-projection window on a display screen of a second device, in which, a first content is displayed on the virtual display of the first device, and a size of the screen-projection window is a second target size; resizing the virtual display based on the first target size; and displaying the resized virtual display in the screen-projection window.

When the instructions in the storage medium is executed by the processor of the device, the device is caused to perform a method including: obtaining a first target size of a virtual display of a first device in a case that the virtual display is displayed in a screen-projection window on a display screen of the second device, in which, the first target size is a size to which the virtual display is to be resized; sending the first target size to the first device; adjusting the screen-projection window to a second target size; receiving a resized virtual display from the first device; and displaying the resized virtual display in the adjusted screen-projection window.

Other embodiments of the present disclosure will be apparent to those skilled in the art from consideration of the specification and practice of the present disclosure disclosed here. This application is intended to cover any variations, uses, or adaptations of the present disclosure following the general principles thereof and including such departures from the present disclosure as come within known or customary practice in the art. It is intended that the specification and examples be considered as exemplary only.

It will be appreciated that the present disclosure is not limited to the exact construction that has been described above and illustrated in the accompanying drawings.

## Claims

1. A method for interaction between devices, applied to a first device, comprising:
receiving (101) a first target size from a second device in a case that a virtual display of the first device is displayed in a screen-projection window on a display screen of a second device, wherein, a first content is displayed on the virtual display of the first device, and a size of the screen-projection window is a second target size, the first target size is a size to which the virtual display is to be resized, and the first target size is determined when the screen-projection window is adjusted to the second target size;
resizing (102) the virtual display based on the first target size; and
displaying (103) the resized virtual display in the screen-projection window.

2. The method according to claim 1, further comprising:
updating the first content displayed on the virtual display based on the first target size, to adapt the updated first content to the resized virtual display;
wherein displaying the resized virtual display in the screen-projection window comprises:
sending the updated first content to the second device, so as to display the updated first content in the screen-projection window.

3. The method according to claim 1 or 2, wherein resizing (102) the virtual display based on the first target size comprises:
resizing the virtual display based on the first target size and a size of a display screen of the first device, to make boundary of the virtual display within boundary of the display screen of the first device.

4. The method according to any of claims 1 to 3, wherein the first target size comprises a target length and a target width, or comprises a target aspect ratio.

5. A method for interaction between devices, applied to a second device, comprising:
obtaining (201) a first target size of a virtual display of a first device in a case that the virtual display is displayed in a screen-projection window on a display screen of the second device, wherein, the first target size is a size to which the virtual display is to be resized;
sending (202) the first target size to the first device;
adjusting (203) the screen-projection window to a second target size;
receiving (204) a resized virtual display from the first device; and
displaying (205) the resized virtual display in the adjusted screen-projection window.

6. The method according to claim 5, wherein receiving (204) the resized virtual display from the first device comprises:
receiving an updated first content on the resized virtual display from the first device;
wherein displaying the resized virtual display in the adjusted screen-projection window comprises:
displaying the updated first content in the adjusted screen-projection window.

7. An apparatus for interaction between devices, applied to a first device, comprising:
a first receiving module (601), configured to receive a first target size from a second device in a case that a virtual display of the first device is displayed in a screen-projection window on a display screen of a second device, wherein, a first content is displayed on the virtual display of the first device, and a size of the screen-projection window is a second target size, the first target size is a size to which the virtual display is to be resized, and the first target size is determined when the screen-projection window is adjusted to the second target size;
a first adjusting module (602), configured to resize the virtual display based on the first target size; and
a first display module (603), configured to display the resized virtual display in the screen-projection window.

8. The apparatus according to claim 7, further comprising:
an updating module, configured to update the first content displayed on the virtual display based on the first target size, to adapt the updated first content to the resized virtual display;
wherein the first displaying module is configured to send the updated first content to the second device, so as to display the updated first content in the screen-projection window.

9. The apparatus according to claim 7 or 8, wherein the first adjusting module (602) is configured to resize the virtual display based on the first target size by:
resizing the virtual display based on the first target size and a size of a display screen of the first device, to make boundary of the virtual display within boundary of the display screen of the first device.

10. The apparatus according to any of claims 7 to 9, wherein the first target size comprises a target length and a target width, or comprises a target aspect ratio.

11. An apparatus for interaction between devices, applied to a second device, comprising:
an obtaining module (701), configured to obtain a first target size of a virtual display of a first device in a case that the virtual display is displayed in a screen-projection window on a display screen of the second device, wherein, the first target size is a size to which the virtual display is to be resized;
a sending module (702), configured to send the first target size to the first device;
a second adjusting module (703), configured to adjust the screen-projection window to a second target size;
a second receiving module (704), configured to receive a resized virtual display from the first device; and
a second displaying module (705), configured to display the resized virtual display in the adjusted screen-projection window.

12. The apparatus according to claim 11, wherein the second receiving module (704) is configured to receive an updated first content on the resized virtual display from the first device; and
the second displaying module (705) is configured to display the updated first content in the adjusted screen-projection window.

13. A device, comprising:
a processor; and
a memory for storing instructions executable by the processor;
wherein the processor is configured to perform the method for interaction between devices according to any of claims 1 to 4 when executing the instructions.

14. A device, comprising:
a processor; and
a memory for storing instructions executable by the processor;
wherein the processor is configured to perform the method for interaction between devices according to claim 5 or 6 when executing the instructions.

15. A non-transitory computer-readable storage medium having stored therein instructions that, when executed by a processor of a device, causes the device to perform the method for interaction between devices according to any of claims 1-6.
